# EUROPÄISCHE PATENTSCHRIFT

(11) **EP 2 129 501 B1**
(45) Veröffentlichungstag und Bekanntmachung des Hinweises auf die Patenterteilung: **03.06.2015**
(21) Anmeldenummer: 08758358.9
(22) Anmeldetag: 29.04.2008
(51) Int. Cl.: B26D 7/26, A22B 5/16

(54) **MESSERHALTEVORRICHTUNG**
KNIFE HOLDING DEVICE
DISPOSITIF PORTE-COUTEAUX

(30) Priorität: 04.05.2007 DE 102007021071; 03.08.2007 DE 102007036688
(43) Veröffentlichungstag der Anmeldung: 09.12.2009
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2008/003472
(87) Internationale Veröffentlichungsnummer: WO 2008/135205

(56) Entgegenhaltungen:
- WO-A-02/11546
- DE-A1- 3 541 640
- US-A- 3 340 916
- US-A- 5 211 097
- US-B1- 6 299 523

## Beschreibung

Die Erfindung betrifft eine Messerhaltevorrichtung mit einem Messerhalter, der ein Unterteil und ein insbesondere plattenförmiges Klemmelement aufweist, wobei das Klemmelement zwischen einer Klemmstellung und einer Freigabestellung verstellbar ist, um eine zwischen dem Unterteil und dem Klemmelement einsetzbare Messerklinge wahlweise einzuklemmen oder freizugeben.

Derartige Messerhalter sind beispielsweise an Entschwartungsmaschinen vorgesehen, können grundsätzlich aber auch in einem anderen Umfeld eingesetzt werden.

US 5,211,097 offenbart eine Messerhalterung gemäß dem Oberbegriff des Anspruchs 1. Ein Rigel kann hierbei eine Drehbewegung ausführen.

Die Entschwartung eines eine Schwarte aufweisenden Fleischprodukts mittels einer Entschwartungsmaschine kann beispielsweise wie folgt ablaufen: Das Fleischprodukt wird mit der Schwartenseite von Hand auf ein Zuführband gelegt, welches das Fleischprodukt gegen eine Zahnwalze sowie eine Andrückwalze transportiert, so dass die Schwarte durch die Zahnwalze unter den Messerhalter gezogen und mittels der Messerklinge abgeschnitten werden kann. Das entschwartete Fleischprodukt wird dann an ein Abführband übergeben. Die Schwarte wird durch einen Abstreifkamm von der Zahnwalze entfernt und fällt nach unten in einen Behälter.

Bei bekannten Messerhaltevorrichtungen ist zum Einklemmen der Messerklinge das Klemmelement über separate Befestigungsmittel an dem Unterteil befestigbar. Soll die Messerklinge ausgewechselt werden, so müssen zuvor in zeitraubender Weise die Befestigungsmittel mittels geeigneter Werkzeuge gelöst werden.

Aufgabe der Erfindung ist es daher, eine Vorrichtung der eingangs genannten Art bereitzustellen, bei welcher die Messerklinge auf möglichst einfache Weise ausgewechselt werden kann, wobei insbesondere außerdem eine einfache Reinigung des Messerhalters möglich sein soll.

Diese Aufgabe wird durch eine Vorrichtung mit den Merkmalen des Anspruchs 1 und insbesondere dadurch gelöst, dass eine an dem Klemmelement angreifende Spanneinrichtung zum Verstellen des Klemmelements zwischen der Freigabestellung und der Klemmstellung vorgesehen ist, wobei das Unterteil ein Gegenlager für das Klemmelement aufweist, welches derart mit dem Klemmelement zusammenwirkt, dass das Klemmelement beim Verstellen eine Dreh- oder Kippbewegung um das Gegenlager ausführt.

Das Gegenlager der erfindungsgemäßen Messerhaltevorrichtung kann nicht nur dazu ausgebildet sein, das Klemmelement am Unterteil zu halten, d.h. beim Verstellen gegen ein Lösen von dem Unterteil zu sichern, sondern dient außerdem dazu, die Klemmplatte zu einer Dreh- oder Kippbewegung zu veranlassen, wenn das Klemmelement durch die Spanneinrichtung betätigt wird. Durch die Dreh- oder Kippbewegung, die das Klemmelement beim Verstellen zwischen der Freigabestellung und der Klemmstellung ausführt, lässt sich mit relativ geringem Kraftaufwand über die Spanneinrichtung eine ausreichend hohe Klemmkraft auf die Messerklinge aufbringen.

Durch umgekehrtes Betätigen der Spanneinrichtung kann das Klemmelement auf einfache Weise von der Klemmstellung zurück in die Freigabestellung verstellt werden, in der die Messerklinge entnommen werden kann. Insbesondere ermöglicht die Erfindung somit einen werkzeuglosen und somit schnell und einfach durchführbaren Klingenwechsel.

Bevorzugt weist die Spanneinrichtung eine längenveränderliche, insbesondere zwischen einer gestreckten und einer geknickten Stellung verstellbare, Gelenkanordnung auf. Bei der Gelenkanordnung kann es sich insbesondere um einen Kniehebel handeln, der beispielsweise mittels eines Betätigungshebels verstellbar ist. Der Kniehebel kann aus zwei einarmigen, durch ein Gelenk miteinander verbundenen Spannhebeln bestehen, die an ihren dem Gelenk gegenüberliegenden Enden ebenfalls gelenkig gelagert sind. Durch einen Kniehebel kann auf einfache Weise eine Schnellspanneinrichtung realisiert werden. Der Kniehebel ermöglicht eine hohe Kraftübersetzung, so dass hohe Spann- bzw. Klemmkräfte erreichbar sind.

Die Spanneinrichtung kann auch eine Exzentereinrichtung aufweisen. Unter einer Exzentereinrichtung ist dabei insbesondere eine um eine Achse drehbare oder auf einer Welle angebrachte Steuerungsscheibe zu verstehen, deren Mittelpunkt von der Achse beabstandet ist bzw. außerhalb der Wellenachse liegt und die eine Steuerkurve umfasst, die insbesondere eine Kreisform oder eine Teilkreisform aufweist. Die Steuerungsscheibe kann dabei auch einen von einer kreisrunden Form abweichenden Außenumfang (Steuerkurve) aufweisen, d.h. die Steuerungsscheibe bzw. deren Steuerkurve kann auch asymmetrisch oder unrund ausgebildet sein.

Nach einer möglichen Ausgestaltung der Erfindung weist das Unterteil eine Oberseite und das Klemmelement eine Unterseite auf, wobei in der Freigabestellung die Oberseite und die Unterseite einen Öffnungswinkel einschließen. Hierdurch werden das Entnehmen und das Einsetzen der Messerklinge vereinfacht. Insbesondere kann das Unterteil eine Anschlagfläche für das Klemmelement aufweisen, die den Öffnungswinkel begrenzt.

Die Spanneinrichtung greift an dem Klemmelement an. Bevorzugt ist die Spanneinrichtung an dem Klemmelement angelenkt. Besonders bevorzugt ist es, wenn das Klemmelement einen hinteren Betätigungsbereich aufweist, an dem die Spanneinrichtung angelenkt ist oder angreift. Ist die Spanneinrichtung unterhalb des Klemmelements angeordnet, kann hierdurch der hintere Betätigungsbereich des Klemmelements nach oben gedrückt werden, um die Dreh- oder Kippbewegung des Klemmelements auszulösen. Bei einer Anlenkung kann der hintere Betätigungsbereich des Klemmelements - je nach Betätigungsrichtung - nach oben gedrückt oder nach unten gezogen werden, um die Dreh- oder Kippbewegung des Klemmelements auszulösen.

Nach einer weiteren möglichen Ausgestaltung der Erfindung umfasst das Klemmelement einen vorderen Klemmbereich, mit dem die Messerklinge einklemmbar ist, und einen hinteren Betätigungsbereich, an dem die Spanneinrichtung angreift, wobei das Gegenlager in der Freigabestellung und der Klemmstellung zwischen dem vorderen Klemmbereich und dem hinteren Betätigungsbereich angeordnet ist. Hierdurch wird eine wippenartige Anordnung für das Klemmelement geschaffen, wobei das Gegenlager das Klemmelement einerseits am Unterteil festhält und andererseits die Dreh- bzw. Kippbewegung relativ zum Unterteil ermöglicht.

Bevorzugt umfassen das Gegenlager und das Klemmelement jeweils einen Kopplungsabschnitt, die beim Verstellen ineinander greifend angeordnet sind. Hierdurch kann das erfindungsgemäße Zusammenwirken des Gegenlagers mit dem Klemmelement auf besonders einfache Weise realisiert werden.

Nach einer weiteren möglichen Ausgestaltung der Erfindung ist das Klemmelement zusätzlich in eine Entkoppelungs- und/oder Reinigungsstellung überführbar. Bei der Entkoppelungs- und/oder Reinigungsstellung handelt es sich folglich um wenigstens eine von der Freigabestellung verschiedene Stellung des Klemmelements.

Bevorzugt ist das Klemmelement in der Entkoppelungs- und/oder Reinigungsstellung von dem Gegenlager entkoppelt. Insbesondere wirken in der Entkoppelungs- und/oder Reinigungsstellung das Gegenlager und das Klemmelement nicht mehr derart zusammen, wie es vorstehend beschrieben wurde. Bevorzugt ist es, wenn das Klemmelement zunächt in eine Entkoppelungsstellung, in der das Klemmelement von dem Gegenlager entkoppelt ist, und anschließend in eine Reinigungsstellung überführt werden kann, in der das Klemmelement vollständig von dem Unterteil weggeschwenkt ist. Hierdurch ist der Messerhalter für eine Reinigung besonders gut zugänglich.

Vorzugsweise sind alle Stellungen des Klemmelementes mittels eines einzigen Betätigungshebels einstellbar.

Nach einer weiteren möglichen Ausgestaltung der Erfindung sind verstellbare Blockiermittel vorgesehen, welche eine Überführung des Klemmelements in die Entkoppelungs- und/oder Reinigungsstellung wahlweise unterbinden oder erlauben. Befinden sich die Blockiermittel in einer Blockierstellung, ist das Klemmelement ausschließlich zwischen der Klemmstellung und der Freigabestellung verstellbar. Insbesondere kann folglich mit den Blockiermitteln gewissermaßen zwischen dem "normalen" Klemmbetrieb zum Festklemmen oder Freigeben des Messers und einem zusätzlichen Reinigungsbetrieb zum Reinigen des Messerhalters umgeschaltet werden.

Bevorzugt sind die Blockiermittel in der die Überführung unterbindenden Stellung derart angeordnet, dass das Gegenlager und das Klemmelement unlösbar miteinander gekoppelt sind. Insbesondere greifen Kopplungsabschnitte des Gegenlagers und des Klemmelements verriegelnd ineinander.

Die Blockiermittel, welche bevorzugt um eine Achse drehbar sind, können beispielsweise einen Anschlag für das Klemmelement und/oder für die Spanneinrichtung umfassen. Der Anschlag kann beispielsweise dazu ausgebildet sein, einen Betätigungsbereich des Klemmelements und/oder ein Ende der Spanneinrichtung an einer Bewegung zu hindern, die ohne den Anschlag das Klemmelement außer Eingriff mit dem Gegenlager treten lassen kann. Beispielsweise durch Drehen der Blockiermittel kann der Anschlag zwischen einer wirksamen, die oben erwähnte Bewegung unterbindenden Stellung und einer unwirksamen Stellung verstellt werden, in welcher das Klemmelement von dem Unterteil gelöst und in die erwähnte Reinigungsstellung geschwenkt werden kann.

Die Erfindung betrifft weiterhin eine Entschwartungsmaschine mit einer Messerhaltevorrichtung, wie sie vorstehend beschrieben ist.

Die Erfindung wird im Folgenden beispielhaft unter Bezugnahme auf die Zeichnung beschrieben. Es zeigen:
- Fig. 1: eine Messerhaltevorrichtung gemäß einer Ausführungsform der Erfindung, wobei sich ein Klemmelement in einer Freigabestellung befindet,
- Fig. 2: die Messerhaltevorrichtung von Fig. 1, wobei sich das Klemmelement in einer Klemmstellung befindet,
- Fig. 3: die Messerhaltevorrichtung von Fig. 1, wobei sich das Klemmelement in einer Entkoppelungsstellung befindet,
- Fig. 4: die Messerhaltevorrichtung von Fig. 1, wobei sich das Klemmelement in einer Reinigungsstellung befindet,
- Fig. 5: eine Messerhaltevorrichtung gemäß einer weiteren Ausführungsform der Erfindung, wobei sich ein Klemmelement in einer Freigabestellung befindet,
- Fig. 6: die Messerhaltevorrichtung von Fig. 5, wobei sich das Klemmelement in einer Klemmstellung befindet,
- Fig. 7: die Messerhaltevorrichtung von Fig. 5, wobei sich das Klemmelement in einer Entkoppelungsstellung befindet, und
- Fig. 8: die Messerhaltevorrichtung von Fig. 5, wobei sich das Klemmelement in einer Reinigungsstellung befindet.

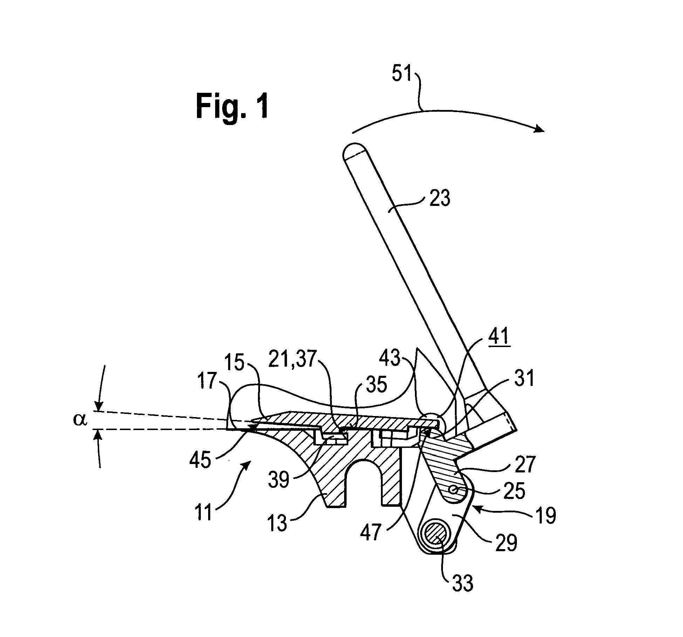

Die in Fig. 1 dargestellte Messerhaltevorrichtung, die insbesondere für eine nicht dargestellte Entschwartungsmaschine vorgesehen ist, umfasst einen Messerhalter 11. Der Messerhalter 11 weist ein Unterteil 13 und eine Klemmplatte 15 auf, die in dieser Darstellung über dem Unterteil 13 angeordnet ist. Die Klemmplatte 15 ist in Fig. 1 in einer Freigabestellung gezeigt.

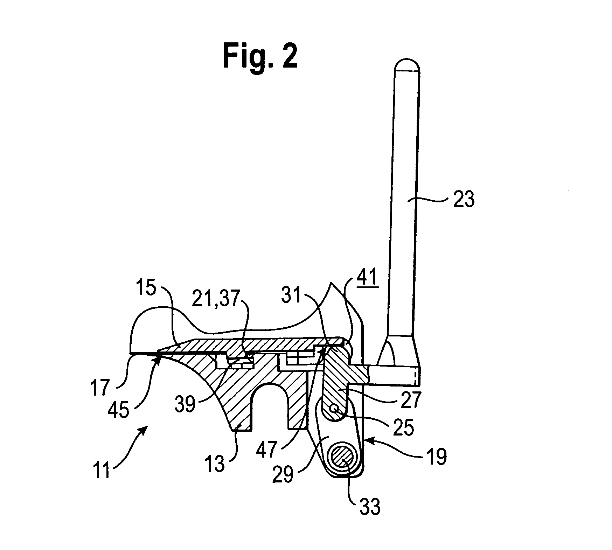

Die Klemmplatte 15 besitzt in einem vorderen Klemmbereich 45 eine ebene Unterseite, welche mit einer in einem vorderen Klemmbereich des Unterteils 13 vorhandenen ebenen Oberseite einen Öffnungswinkel α einschließt, so dass zwischen der Oberseite des Unterteils 13 und der Unterseite der Klemmplatte 15 eine Messerklinge 17 eingesetzt und nach Verstellen der Klemmplatte 15 aus der Freigabestellung der Fig. 1 in eine Klemmstellung, welche nachstehend anhand Fig. 2 beschrieben wird, eingeklemmt werden kann. Das Unterteil 13 besitzt eine Anschlagfläche 35 für die Klemmplatte 15, welche in der Freigabestellung der Klemmplatte 15 den zwischen der ebenen Oberseite des Unterteils 13 und der ebenen Unterseite der Klemmplatte 15 ausgebildeten Öffnungswinkel α begrenzt.

Das Unterteil 13 weist ein Gegenlager 21 für die Klemmplatte 15 auf. Das Gegenlager 21 umfasst einen Kopplungsabschnitt 37, wobei der Kopplungsabschnitt 37 des Gegenlagers 21 und ein Kopplungsabschnitt 39 der Klemmplatte 15 in der Freigabestellung sowie in der Klemmstellung verriegelnd ineinander greifen, so dass in diesen beiden Stellungen ein Abheben der Klemmplatte 15 von dem Unterteil 13 verhindert wird. Die beiden insbesondere hakenförmig ausgebildeten Kopplungsabschnitte 37, 39 weisen jeweils einen Vorsprung auf, wobei die Vorsprünge jeweils in eine komplementär ausgebildete Hinterschneidung des jeweils anderen Kopplungsabschnitts 39, 37 eingreifen.

Die Messerhaltevorrichtung umfasst ferner einen Kniehebel 19, welcher als Spanneinrichtung zum Verstellen der Klemmplatte 15 zwischen der Freigabestellung und der Klemmstellung fungiert. Der Kniehebel 19 weist zwei einarmige, durch ein Gelenk 25 miteinander verbundene Spannhebel 27, 29 auf. Der eine Spannhebel 29 ist mit seinem dem Gelenk 25 gegenüberliegenden Ende 33 an einem Gehäuse der Messerhaltevorrichtung angelenkt. Der andere Spannhebel 27 ist mit seinem dem Gelenk 25 gegenüberliegenden Ende 31 an einem hinteren Betätigungsbereich 47 der Klemmplatte 15 angelenkt und mit einem Betätigungshebel 23 starr verbunden. In der Freigabestellung der Klemmplatte 15 gemäß Fig. 1 befindet sich der Kniehebel 19 in einer entspannten, geknickten Stellung.

Zum Verstellen der Klemmplatte 15 aus der in Fig. 1 gezeigten Freigabestellung in die in Fig. 2 gezeigte Klemmstellung wird der Betätigungshebel 47 in einer Betätigungsrichtung 51 betätigt, wodurch der Kniehebel 19 durchgedrückt und damit in eine gespannte, gestreckte Stellung überführt wird. Aufgrund der Anlenkung des Endes 31 des Spannhebels 27 des Kniehebels 19 an den Betätigungsbereich 47 der Klemmplatte 15 wird die Klemmplatte 15 im Betätigungsbereich 47 nach oben gedrückt. Hierdurch wird die Klemmplatte 15 in eine Dreh- und/oder Kippbewegung versetzt, und zwar um das Gegenlager 21, das in der Freigabestellung und in der Klemmstellung der Klemmplatte 15 zwischen dem Klemmbereich 45 und dem Betätigungsbereich 47 der Klemmplatte 15 angeordnet ist und die Klemmplatte 15 festhält. Als Folge hiervon wird der Klemmbereich 45 der Klemmplatte 15 nach unten gedrückt, so dass die zwischen dem Unterteil 13 und der Klemmplatte 15 eingesetzte Messerklinge 17 fest zwischen der ebenen Oberseite des Unterteils 13 und der ebenen Unterseite der Klemmplatte 15 eingeklemmt wird. In der Klemmstellung gemäß Fig. 2 befindet sich der Kniehebel 19 bevorzugt in einer stabilen Übertotpunktlage.

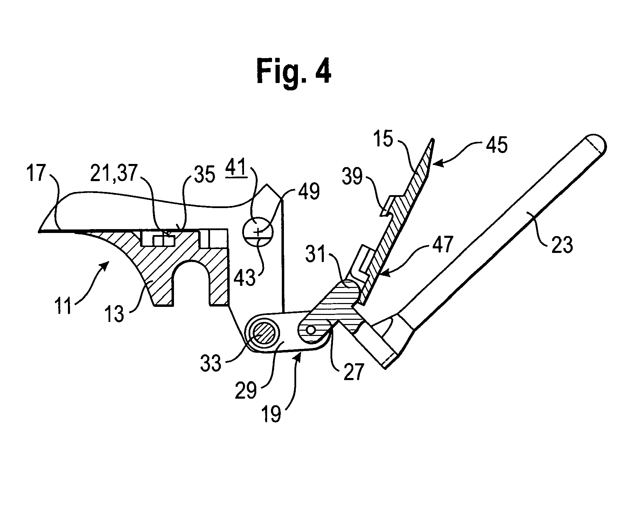

Darüber hinaus umfasst die Messerhaltevorrichtung um eine Achse 49 (Fig. 4) drehbare Blockiermittel 41, welche im Bereich des Endes 31 des Spannhebels 27 des Kniehebels 19 an dem Gehäuse der Messerhaltevorrichtung angebracht sind. Die Blockiermittel 41 umfassen einen als länglichen Teilzylinderabschnitt ausgebildeten Anschlag 43, der in der Freigabestellung und in der Klemmstellung der Klemmplatte 15 mit einer ebenen Anschlagfläche vertikal orientiert ist, wie am besten in Fig. 1 erkennbar ist, und das obere Ende 31 des Spannhebels 27 des Kniehebels 19 abstützt. Hierdurch wird verhindert, dass sich die Klemmplatte 15 horizontal nach vorne, in Richtung des Klemmbereichs 47 bewegt, so dass der verriegelnde Eingriff der Kopplungsabschnitte 37, 39 des Gegenlagers 21 und der Klemmplatte 15 erhalten bleibt. Das Gegenlager 21 und das Klemmelement 15 sind unlösbar miteinander gekoppelt.

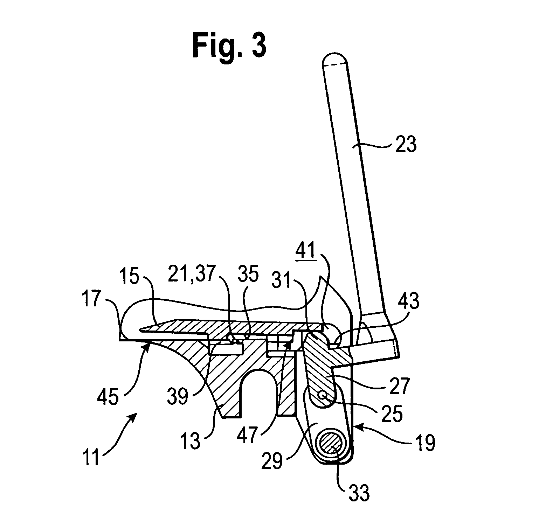

Neben der Freigabestellung und der Klemmstellung kann die Klemmplatte 15 auch eine Entkoppelungsstellung einnehmen, welche in Fig. 3 gezeigt ist. Hierzu werden die Blockiermittel 41 um die Achse 49 um 90° gedreht, so dass der Anschlag 43, der bezüglich der Achse 49 exzentrisch angeordnet ist, mit seiner Anschlagfläche nunmehr horizontal orientiert ist und das obere Ende 31 des Spannhebels 27 des Kniehebels 19 nicht mehr abgestützt wird. Hierdurch wird es ermöglicht, dass die Klemmplatte 15 mittels des Betätigungshebels 23 horizontal nach vorne, in Richtung des Klemmbereichs 47 bewegt werden kann, wodurch die Kopplungsabschnitte 37, 39 des Gegenlagers 21 und der Klemmplatte 15 außer Eingriff gelangen und dadurch voneinander entkoppelt werden.

Als Folge hiervon wiederum kann die Klemmplatte 15 mittels des Betätigungshebels 23 aus der in Fig. 3 gezeigten Entkoppelungsstellung in die in Fig. 4 gezeigte Reinigungsstellung geschwenkt werden, so dass sämtliche Teile der Messerhaltevorrichtung für eine Reinigung gut zugänglich sind.

Das in den Fig. 1 bis 4 dargestellte Profil des Messerhalters 11 ist über die gesamte Länge der sich senkrecht zur Zeichenebene erstreckenden Messerklinge 17 zumindest im Wesentlichen konstant, so dass die Messerklinge 17 über ihre gesamte Arbeitslänge - und damit über die gesamte Arbeitsbreite einer mit dem Messerhalter 11 ausgestatteten Maschine - zwischen der Klemmplatte 15 und dem Unterteil 13 flächig eingeklemmt werden kann. Die Spannvorrichtung ist somit über die gesamte Messerlänge durchgehend wirksam, so dass mit einem einen relativ einfachen Aufbau aufweisenden Spannmechanismus eine äußerst effektive Klemmung des Messers erzielt werden kann.

Die erfindungsgemäße Messerhaltevorrichtung verfügt somit über eine Schnellspanneinrichtung, mit der die Messerklinge 17 besonders schnell und einfach und insbesondere werkzeuglos aus- und eingebaut werden kann, wobei zusätzlich eine vorteilhafte Reinigungsstellung möglich ist, in der zu reinigende Bereiche des Messerhalters sehr gut zugänglich sind.

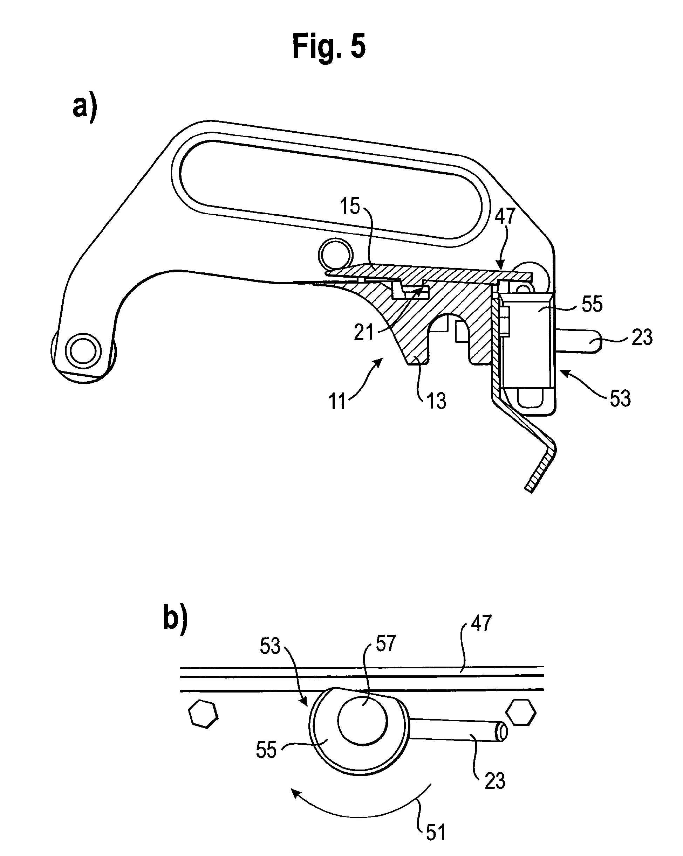

Die in den Fig. 5 bis 8 dargestellte weitere Ausführungsform einer Messerhaltevorrichtung unterscheidet sich von der in den Fig. 1 bis 4 dargestellten Ausführungsform dadurch, dass anstelle eines Kniehebels eine Exzentereinrichtung 53 als Spanneinrichtung verwendet wird. Der Messerhalter 11 hingegen ist in beiden Ausführungsformen gleich.

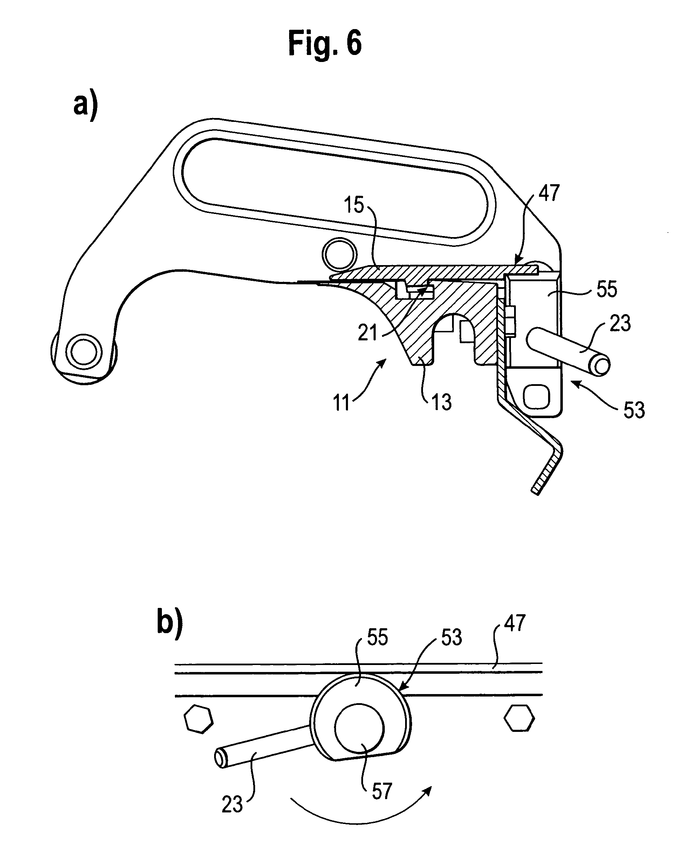

In den Fig. 5a, 6a, 7 und 8 ist die Messerhaltevorrichtung jeweils in einer Seitenansicht gezeigt. In den Fig. 5b und 6b ist die Messerhaltevorrichtung im Bereich der Exzentereinrichtung 53, die an der Rückseite der Messerhaltevorrichtung angebracht ist, jeweils in einer Rückansicht gezeigt.

Die Exzentereinrichtung 53 umfasst eine auf einer Welle 57 angebrachte Steuerungsscheibe 55, wobei die Steuerungsscheibe 55 exzentrisch zu der Wellenachse angeordnet ist. Darüber hinaus ist die Steuerungsscheibe 55 an einer Seite abgeplattet, d.h. der Steuerungsscheibe fehlt ein Kreissegment zu einer vollen Kreisscheibe. Darüber hinaus ist ein Betätigungshebel 23 vorgesehen, der mit der Steuerungsscheibe 55 fest verbunden ist.

In Fig. 5 befindet sich die Klemmplatte 15 des Messerhalters 11 in der Freigabestellung. Die Exzentereinrichtung 53 befindet sich in einer zugehörigen Freigabedrehstellung, in der die Steuerungsscheibe 55 mit ihrer abgeplatteten Seite in Richtung des hinteren Betätigungsbereichs 47 der Klemmplatte 15 orientiert ist. Die Steuerungsscheibe 55 greift in der Freigabedrehstellung daher nicht an dem hinteren Betätigungsbereich 47 der Klemmplatte 15 an, sondern ist von diesem beabstandet angeordnet, d.h. gibt diesen frei.

Um die Klemmplatte 15 aus der in Fig. 5 gezeigten Freigabestellung in die in Fig. 6 gezeigte Klemmstellung zu verstellen, wird der Betätigungshebel 23 entlang der Betätigungsrichtung 51 betätigt. Hierdurch wird die Steuerungsscheibe 55 in die in Fig. 6b gezeigte Klemmdrehstellung gebracht, wodurch aufgrund der exzentrischen Anordnung der Steuerungsscheibe 55 der hintere Betätigungsbereichs 47 der Klemmplatte 15 nach oben gedrückt wird. Dies bewirkt, dass die Klemmplatte 15 - analog zu der Ausführungsform gemäß den Fig. 1 bis 4 - in eine Dreh- und/oder Kippbewegung um das Gegenlager 21 versetzt wird. Die Drehbewegung der Steuerungsscheibe 55 ist folglich in eine Aufwärtsbewegung des hinteren Betätigungsbereichs 47 der Klemmplatte 15 umsetzbar.

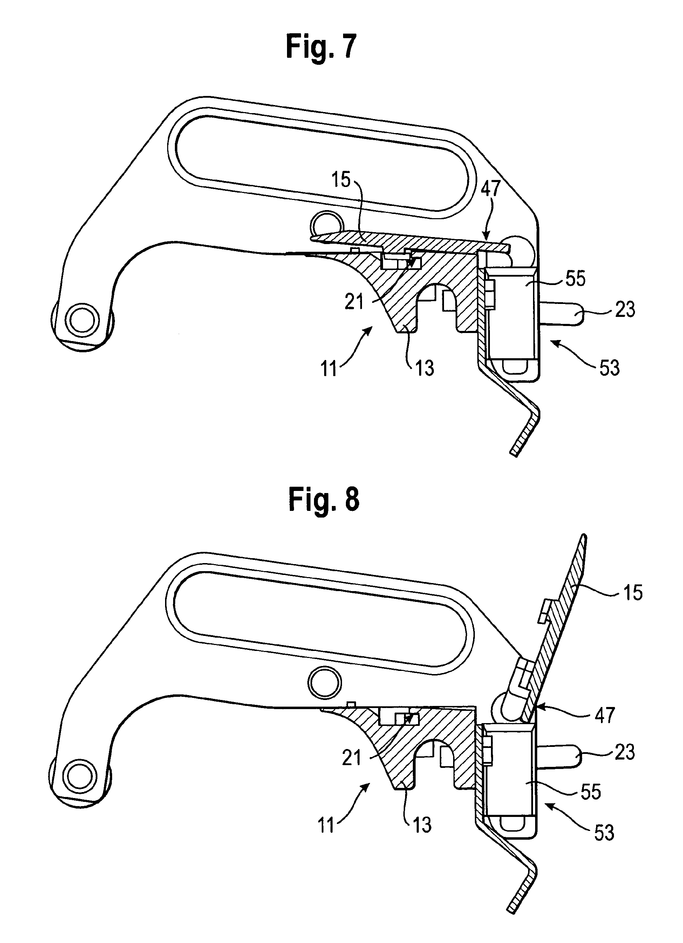

Um die Klemmplatte in die in Fig. 7 gezeigte Entkoppelungsstellung zu überführen, werden die Exzentereinrichtung 53 in die in Fig. 5 gezeigte Freigabedrehstellung zurückgeschwenkt und - analog zu der Ausführungsform gemäß den Fig. 1 bis 4 - der Anschlag 41 (verdeckt) aus seiner vertikalen Orientierung, in der er sich in der Freigabestellung und der Klemmstellung befindet, in seine horizontale Orientierung gedreht, um die nach vorne gerichtete horizontale Bewegung der Klemmplatte 15 und das Entkoppeln der Klemmplatte 15 von dem Gegenlager 21 zu ermöglichen.

Anschließend kann die Klemmplatte 15 dann in die in Fig. 8 gezeigte Reinigungsstellung geschwenkt werden.

### Bezugszeichenliste

- 11: Messerhalter
- 13: Unterteil
- 15: Klemmelement, Klemmplatte
- 17: Messerklinge
- 19: Kniehebel
- 21: Gegenlager
- 23: Betätigungshebel
- 25: Gelenk
- 27: Spannhebel
- 29: Spannhebel
- 31: Ende
- 33: Ende
- 35: Anschlagfläche
- 37: Kopplungsabschnitt
- 39: Kopplungsabschnitt
- 41: Blockiermittel
- 43: Anschlag
- 45: Klemmbereich
- 47: Betätigungsbereich
- 49: Achse
- 51: Betätigungsrichtung
- 53: Exzentereinrichtung
- 55: Steuerungsscheibe
- 57: Welle

- α: Öffnungswinkel

## Patentansprüche

1. Messerhaltevorrichtung, insbesondere für Entschwartungsmaschinen, mit
einem Messerhalter (11), der ein Unterteil (13) und ein insbesondere plattenförmiges Klemmelement (15) aufweist, wobei das Klemmelement (15) zwischen einer Klemmstellung und einer Freigabestellung verstellbar ist, um eine zwischen dem Unterteil (13) und dem Klemmelement (15) einsetzbare Messerklinge (17) wahlweise einzuklemmen oder freizugeben, und
einer an dem Klemmelement (15) angreifenden Spanneinrichtung (19, 53) zum Verstellen des Klemmelements (15) zwischen der Freigabestellung und der Klemmstellung,
**dadurch gekennzeichnet, dass**
das Unterteil (13) ein Gegenlager (21) für das Klemmelement (15) aufweist, welches derart mit dem Klemmelement (15) zusammenwirkt, dass das Klemmelement (15) beim Verstellen eine Dreh- oder Kippbewegung um das Gegenlager (21) ausführt.

2. Messerhaltevorrichtung nach Anspruch 1,
**dadurch gekennzeichnet,**
**dass** die Spanneinrichtung eine längenveränderliche, insbesondere zwischen einer gestreckten und einer geknickten Stellung verstellbare, Gelenkanordnung (19) aufweist.

3. Messerhaltevorrichtung nach Anspruch 1 oder 2,
**dadurch gekennzeichnet,**
**dass** die Spanneinrichtung einen Kniehebel (19) oder eine Exzentereinrichtung (53) aufweist, die bzw. der insbesondere mittels eines Betätigungshebels (23) verstellbar ist.

4. Messerhaltevorrichtung nach Anspruch 3,
**dadurch gekennzeichnet,**
**dass** der Kniehebel (19) aus zwei einarmigen, durch ein Gelenk (25) miteinander verbundenen Spannhebeln (27, 29) besteht, die an ihren dem Gelenk (25) gegenüberliegenden Enden (31, 33) ebenfalls gelenkig gelagert sind, und/oder dass die Exzentereinrichtung (53) eine um eine Achse drehbare, insbesondere auf einer Welle (57) angebrachte, Steuerungsscheibe (55) umfasst, die insbesondere eine zumindest teilkreisförmige Steuerkurve aufweist, deren Mittelpunkt von der Achse beabstandet ist.

5. Messerhaltevorrichtung nach einem der vorstehenden Ansprüche,
**dadurch gekennzeichnet,**
**dass** das Unterteil (13) eine Oberseite und das Klemmelement (15) eine Unterseite aufweist, wobei in der Freigabestellung die Oberseite und die Unterseite einen Öffnungswinkel (α) einschließen, wobei insbesondere das Unterteil (13) eine Anschlagfläche (35) für das Klemmelement (15) aufweist, die den Öffnungswinkel (α) begrenzt.

6. Messerhaltevorrichtung nach einem der vorstehenden Ansprüche,
**dadurch gekennzeichnet,**
**dass** die Spanneinrichtung (19) an dem Klemmelement (15) angelenkt ist, und/oder dass das Klemmelement (15) einen hinteren Betätigungsbereich (47) aufweist, an dem die Spanneinrichtung (19, 53) angelenkt ist oder angreift.

7. Messerhaltevorrichtung nach einem der vorstehenden Ansprüche,
**dadurch gekennzeichnet,**
**dass** das Klemmelement (15) einen vorderen Klemmbereich (45), mit dem die Messerklinge (17) einklemmbar ist, und einen hinteren Betätigungsbereich (47), an dem die Spanneinrichtung (19, 53) angreift, umfasst, wobei das Gegenlager (21) in der Freigabestellung und der Klemmstellung zwischen dem vorderen Klemmbereich (45) und dem hinteren Betätigungsbereich (47) angeordnet ist, und/oder dass das Gegenlager (21) und das Klemmelement (15) jeweils einen Kopplungsabschnitt (37, 39) umfassen, die beim Verstellen ineinander greifend angeordnet.

8. Messerhaltevorrichtung nach einem der vorstehenden Ansprüche,
**dadurch gekennzeichnet,**
**dass** das Klemmelement (11) zusätzlich in eine Entkoppelungs-und/oder Reinigungsstellung überführbar ist, wobei insbesondere das Klemmelement (15) in der Entkoppelungs- und/oder Reinigungsstellung von dem Gegenlager (21) entkoppelt ist.

9. Messerhaltevorrichtung nach Anspruch 8,
**dadurch gekennzeichnet,**
**dass** verstellbare Blockiermittel (41) vorgesehen sind, welche ein Überführung des Klemmelements (11) in die Entkoppelungs-und/oder Reinigungsstellung wahlweise unterbinden oder erlauben, wobei insbesondere die Blockiermittel (41) in der die Überführung unterbindenden Stellung derart angeordnet sind, dass das Unterteil (13) und das Klemmelement (15) im Bereich des Gegenlagers (21) unlösbar miteinander gekoppelt sind.

10. Messerhaltevorrichtung nach Anspruch 9,
**dadurch gekennzeichnet,**
**dass** die Blockiermittel (41) einen Anschlag (43) für das Klemmelement (15) und/oder die Spanneinrichtung (19, 53) umfassen.

11. Messerhaltevorrichtung nach Anspruch 9 oder 10,
**dadurch gekennzeichnet,**
**dass** die Blockiermittel (41) zum Verstellen um eine Achse (49) drehbar sind, wobei insbesondere ein Anschlag (43) der Blockiermittel (41) bezüglich der Achse (49) exzentrisch angeordnet ist.

12. Entschwartungsmaschine mit einer Messerhaltevorrichtung nach einem der vorstehenden Ansprüche.

## Claims

1. A knife holding apparatus, in particular for derinding machines, having
a knife holder (11) which has a lower part (13) and a clamping element (15), in particular of plate shape, wherein the clamping element (15) is adjustable between a clamping position and a release position to selectively clamp or release a knife blade (17) insertable between the lower part (13) and the clamping element (15); and
a clamping device (19, 53) engaging at the clamping element (15) for the adjustment of the clamping element (15) between the release position and the clamping position,
**characterized in that**
the lower part (13) has a counter support (21) for the clamping element (15) which cooperates with the clamping element (15) such that the clamping element (15) carries out a rotary movement or a tilting movement about the counter support (21) on the adjustment.

2. A knife holding apparatus in accordance with claim 1,
**characterized in that**
the clamping device has a length-changeable joint arrangement (19) which is in particular adjustable between a stretched position and a kinked position.

3. A knife holding apparatus in accordance with claim 1 or claim 2,
**characterized in that**
the clamping device has a toggle lever (19) or an eccentric device (53) which is in particular adjustable by means of an actuation lever (23).

4. A knife holding apparatus in accordance with claim 3,
**characterized in that**
the toggle lever (19) comprises two one-armed clamping levers (27, 29) which are connected to one another by a joint (25) and which are likewise journaled in a jointed manner at their ends (31, 33) disposed opposite the joint (25); and/or **in that** the eccentric device (53) comprises a control disk (55) which is rotatable about an axis, is in particular attached to a shaft (57) and in particular has a cam follower of at least part circle shape whose center is spaced apart from the axis.

5. A knife holding apparatus in accordance with any one of the preceding claims,
**characterized in that**
the lower part (13) has an upper side and the clamping element (15) has a lower side, with the upper side and the lower side including an opening angle (α) in the release position, wherein in particular the lower part (13) has an abutment surface (35) for the clamping element (15) which bounds the opening angle (α).

6. A knife holding apparatus in accordance with any one of the preceding claims,
**characterized in that**
the clamping device (19) is pivotally connected to the clamping element (15); and/or **in that** the clamping element (15) has a rear actuation region (47) at which the clamping device (19, 53) is pivotally connected or engages.

7. A knife holding apparatus in accordance with any one of the preceding claims,
**characterized in that**
the clamping element (15) comprises a front clamping region (45) with which the knife blade (17) can be clamped and a rear actuation region (47) at which the clamping device (19, 53) engages, with the counter support (21) being arranged between the front clamping region (45) and the rear actuation region (47) in the release position and in the clamping position; and/or **in that** the counter support (21) and the clamping element (15) each comprise a coupling section (37, 39), said coupling sections mutually engaging on the adjustment.

8. A knife holding apparatus in accordance with any one of the preceding claims,
**characterized in that**
the clamping element (11) can additionally be moved into a decoupling position and/or cleaning position, wherein in particular the clamping element (15) is decoupled from the counter support (21) in the decoupling position and/or cleaning position.

9. A knife holding apparatus in accordance with claim 8
**characterized in that**
adjustable blocking means (41) are provided which selectively suppress or allow a movement of the clamping element (11) into the decoupling position and/or cleaning position, wherein in particular the blocking means (41) are arranged in the position suppressing the movement such that the lower part (13) and the clamping element (15) are unreleasably coupled to one another in the region of the counter support (21).

10. A knife holding apparatus in accordance with claim 9
**characterized in that**
the blocking means (41) comprise an abutment (43) for the clamping element (15) and/or the clamping device (19, 53).

11. A knife holding apparatus in accordance with claim 9 or claim 10,
**characterized in that**
the blocking means (41) are rotatable about an axis (49) for the adjustment, wherein in particular an abutment (43) of the blocking means (41) is arranged eccentrically with respect to the axis (49).

12. A derinding machine having a knife holding apparatus in accordance with any one of the preceding claims.

## Revendications

1. Dispositif porte-couteau, en particulier pour machine de découennage, comprenant
un porte-couteau (11) qui comprend une partie inférieure (13) et un élément de coincement (15) en particulier en forme de plaque, dans lequel l'élément de coincement (15) est déplaçable entre une position de coincement et une position de libération, afin de coincer ou de libérer au choix une lame de couteau (17) à mettre en place entre la partie inférieure (13) et l'élément de coincement (15), et
un dispositif de serrage (19, 53) qui attaque l'élément de coincement (15) afin de déplacer l'élément de coincement (15) entre la position de libération et la position de coincement,
**caractérisé en ce que**
la partie inférieure (13) comporte une contrebutée (21) pour l'élément de coincement (15), laquelle coopère avec l'élément de coincement (15) de telle manière que l'élément de coincement (15) exécute lors du déplacement un mouvement rotatif ou un mouvement de basculement autour de la contrebutée (21).

2. Dispositif porte-couteau selon la revendication 1,
**caractérisé en ce que** le dispositif de serrage comprend un agencement d'articulation (19) à longueur variable, en particulier déplaçable entre une position en extension et une position pliée.

3. Dispositif porte-couteau selon la revendication 1,
**caractérisé en ce que** le dispositif de serrage comprend un levier à genouillère (19) ou un dispositif à excentrique (53), qui est déplaçable en particulier au moyen d'un levier d'actionnement (23).

4. Dispositif porte-couteau selon la revendication 3,
**caractérisé en ce que** le levier à genouillère (19) est constitué de deux leviers de serrage (27, 29) à un seul bras, reliés l'un à l'autre par une articulation (25), qui sont également montés de façon articulée à leurs extrémités (31, 33) opposée à l'articulation (25), et/ou **en ce que** le dispositif à excentrique (53) comprend une plaque de commande (55) capable de rotation autour d'un axe et montée en particulier sur un arbre (57), laquelle comporte en particulier une came de commande à forme au moins partiellement circulaire, dont le centre est écarté de l'axe.

5. Dispositif porte-couteau selon l'une des revendications précédentes,
**caractérisé en ce que** la partie inférieure (13) comporte une face supérieure et l'élément de coincement (15) comporte une face inférieure, et dans la position de libération la face supérieure et la face inférieure définit un angle d'ouverture (α), dans lequel la partie inférieure (13) comporte en particulier une surface de butée (35) pour l'élément de coincement (15), surface qui limite l'angle d'ouverture (α).

6. Dispositif porte-couteau selon l'une des revendications précédentes,
**caractérisé en ce que** le dispositif de serrage (19) et articulé sur l'élément de coincement (15), et/ou **en ce que** l'élément de coincement (15) comporte une zone d'actionnement postérieure (47) sur laquelle le dispositif de serrage (19, 53) est articulé ou sur laquelle attaque le dispositif de serrage (19, 53).

7. Dispositif porte-couteau selon l'une des revendications précédentes,
**caractérisé en ce que** l'élément de coincement (15) comporte une zone de coincement antérieure (45) avec laquelle la lame de couteau (17) peut être coincée, et une zone d'actionnement postérieure (47) sur laquelle attaque le dispositif de serrage (19, 53), dans lequel la contrebutée (21) est agencée dans la position de libération et dans la position de coincement entre la zone de coincement antérieure (45) et la zone d'actionnement postérieure (47), et/ou **en ce que** la contrebutée (21) et l'élément de coincement (15) incluent respectivement un tronçon de couplage (37, 39), lesquels sont agencés de manière à s'engager l'un dans l'autre lors du déplacement.

8. Dispositif porte-couteau selon l'une des revendications précédentes,
**caractérisé en ce que** l'élément de coincement (11) et susceptible d'être transféré additionnellement vers une position de découplage et/ou de nettoyage, dans lequel l'élément de coincement (15) est en particulier découplé vis-à-vis de la contrebutée (21) dans la position de découplage et/ou de nettoyage.

9. Dispositif porte-couteau selon la revendication 8,
**caractérisé en ce qu'**il est prévu des moyens de blocage déplaçables (41), qui interdisent ou qui permettent au choix de transférer l'élément de coincement (11) jusque dans la position de découplage et/ou de nettoyage, et les moyens de blocage (41) sont en particulier agencés, dans la position qui interdit le transfert, de telle manière que la partie inférieure (13) et l'élément de coincement (15) sont couplés l'un à l'autre de manière indétachable dans la région de la contrebutée (21).

10. Dispositif porte-couteau selon la revendication 9,
**caractérisé en ce que** les moyens de blocage (41) incluent une butée (43) pour l'élément de coincement (15) et/ou pour le dispositif de serrage (19, 53).

11. Dispositif porte-couteau selon la revendication 9 ou 10,
**caractérisé en ce que**, pour le déplacement, les moyens de blocage (41) sont capables de rotation autour d'un axe (49), dans lequel une butée (43) des moyens de blocage (41) est en particulier agencée de manière excentrée par rapport à l'axe (49).

12. Machine de découennage comprenant un dispositif porte-couteau selon l'une des revendications précédentes.
